# EUROPEAN PATENT APPLICATION

(11) **EP 4 000 788 A1**
(43) Date of publication of application: **25.05.2022**
(21) Application number: 20840621.5
(22) Date of filing: 24.06.2020
(51) Int. Cl.: B23K 11/02, F16H 48/40

(54) **METHOD AND STRUCTURE FOR BONDING METAL MEMBER**

(30) Priority: 17.07.2019 JP 2019131841
(71) Applicant: MAZDA MOTOR CORPORATION, Hiroshima 730-8670 (JP)
(72) Inventor: HASHIMOTO, Akira, Hiroshima 730-8670 (JP)
(74) Representative: Müller-Boré & Partner Patentanwälte PartG mbB
(86) International application number: PCT/JP2020/024905
(87) International publication number: WO 2021/010121

(57) **Abstract**

A joining outer diameter portion located at an axial-direction intermediate portion and fitting tapered outer diameter portions located on both axial-direction sides across the joining outer diameter portion are formed on an outer peripheral face portion of an inner metal member. A joining inner diameter portion corresponding to the joining outer diameter portion and having a smaller diameter than the joining outer diameter portion so as to overlap with the joining outer diameter portion, and fitting tapered inner diameter portions corresponding to the fitting tapered outer diameter portions are formed on an inner peripheral face portion of an outer metal member. The joining outer diameter portion of the inner metal member and the joining inner diameter portion of the outer metal member are joined by means of resistance heating generated by conducting electricity while the joining outer diameter portion of the inner metal member and the joining inner diameter portion of the outer metal member are pressurized in the axial direction. The fitting tapered outer diameter portions of the inner metal member and the fitting tapered inner diameter portions of the outer metal member are brought into a fitted state in association with the joining.

## Description

### Technical Field

The present disclosure relates to a metal member joining method and a metal member joining structure for joining an outer peripheral face portion of an inner metal member and an inner peripheral face portion of an outer metal member.

### Background Art

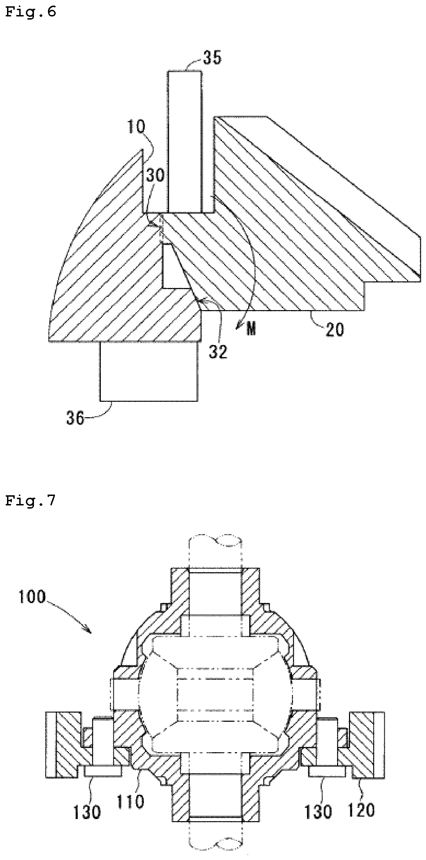

In a conventional metal member joining method, for example, a differential case 110 and a ring gear 120 in a differential device 100 are fastened together by a bolt 130 as illustrated in FIG. 7. This bolt fastening causes an increase in the outer diameter of the ring gear 120 due to the necessity of forming a bolt hole and also causes an increase in cost and weight due to the existence of the bolt 130. Thus, in order to reduce cost and weight, ring mash joining is recently performed instead of the bolt fastening.

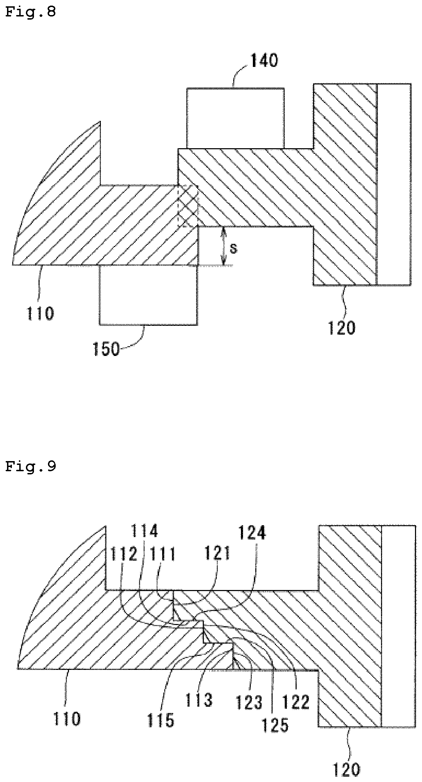

In the ring mash joining, resistance heating is performed by conducting electricity while the differential case 110 serving as an inner metal member and the ring gear 120 serving as an outer metal member are pressurized in the axial direction via electrodes 140 and 150 as illustrated in FIG. 8 to thereby soften metal of a contact portion so that plastic flow is generated for diffusion joining. This ring mash joining has problems in that the larger joining energy causes deformation of the ring gear 120 and also causes a level difference s between the differential case 110 and the ring gear 120 after joining, and accordingly stress concentration occurs with respect to a bending moment acting on the ring gear 120.

Patent Literature 1 proposes a method in which first and second outer diameter portions of an inner metal member are respectively brought into contact with first and second inner diameter portions of an outer metal member and, while they are pressurized in the axial direction via electrodes, electric conduction is performed for ring mash joining so that the first outer diameter portion of the inner metal member and the first inner diameter portion of the outer metal member are joined together to form a first joined portion, and the second outer diameter portion of the inner metal member and the second inner diameter portion of the outer metal member are joined together to form a second joined portion, forming a closed space between the first joined portion and the second joined portion.

In the method of Patent Literature 1, although two joined portions are provided, the joining range can be reduced by the closed space, and thus the joining energy becomes small. However, the two joined portions are located on both ends in the axial direction, thus causing a problem in that stress concentration occurs in either of the two joined portions with respect to a bending moment acting on the outer metal member.

Furthermore, Patent Literature 2 proposes a method in which a joining outer diameter portion of an inner metal member and a joining inner diameter portion of an outer metal member are brought into contact with each other and, while they are pressurized in the axial direction via electrodes, electric conduction is performed for ring mash joining so that the joining outer diameter portion of the inner metal member and the joining inner diameter portion of the outer metal member are joined together to form a joined portion, and a fitting inclined face portion of the inner metal member and a fitting inclined face portion of the outer metal member are brought into contact with each other to form a tapered fitted portion.

In the method of Patent Literature 2, one joined portion is provided, and thus the joining energy is small, deformation of the outer metal member is also small, and no level difference occurs after joining; however, the joined portion and the tapered fitted portion are located on both ends in the axial direction, thus causing a problem in that stress concentration occurs in the joined portion depending on the direction of a bending moment acting on the outer metal member.

Thus, a method is conceivable in which first, second, and third outer diameter portions 111, 112, and 113 of the differential case 110 serving as the inner metal member are respectively brought into contact with first, second, and third inner diameter portions 121, 122, and 123 of the ring gear 120 serving as the outer metal member and are joined thereto by ring mash joining so that a first step portion 114 between the first outer diameter portion 111 and the second outer diameter portion 112 in the differential case 110 and a second step portion 115 between the second outer diameter portion 112 and the third outer diameter portion 113 in the differential case 110 are respectively brought into contact with a first step portion 124 between the first inner diameter portion 121 and the second inner diameter portion 122 in the ring gear 120 and a second step portion 125 between the second inner diameter portion 122 and the third inner diameter portion 123 in the ring gear 120, as illustrated in FIG. 9.

In the method of FIG. 9, three joined portions are provided in the axial direction, and thus the joining length in the axial direction at the time of pressurization can be reduced. Furthermore, the three joined portions are offset from each other in the radial direction, and thus deformation of the ring gear 120 is small, and stress concentration with respect to a bending moment acting on the ring gear 120 is dispersed. In addition, the first step portion 124 and the second step portion 125 in the ring gear 120 are brought into contact with the first step portion 114 and the second step portion 115 in the differential case 110 and then the ring mash joining ends, and thus no level difference occurs after joining, and moreover, stress concentration in the joined portions is dispersed. However, a current path to the three joined portions becomes nonuniform at the time of electric conduction, thus causing problems in that the electric conduction amount needs to be rather increased, the joining is difficult to perform, and moreover, the joining energy increases.

### Citation List

### Patent Literature

Patent Literature 1: Japanese Patent Laid-Open No. 2011-98358
Patent Literature 2: Japanese Patent Laid-Open No. 2016-209926

### Summary of Invention

### Technical Problem

The present disclosure has been made in view of the above conventional problems, and an object of the present disclosure is to provide a metal member joining method and a metal member joining structure in which joining is easy to perform and joining energy is small.

### Solution to Problem

In order to solve the above problems, a metal member joining method according to the present disclosure is
a method of joining an outer peripheral face portion of an inner metal member and an inner peripheral face portion of an outer metal member by means of resistance heating generated by conducting electricity while the outer peripheral face portion of the inner metal member and the inner peripheral face portion of the outer metal member are pressurized in an axial direction, and the method includes
forming, on the outer peripheral face portion of the inner metal member, a joining outer diameter portion located at an axial-direction intermediate portion, and fitting tapered outer diameter portions located on both axial-direction sides across the joining outer diameter portion;
forming, on the inner peripheral face portion of the outer metal member, a joining inner diameter portion corresponding to the joining outer diameter portion and having a diameter smaller than a diameter of the joining outer diameter portion so as to overlap with the joining outer diameter portion, and fitting tapered inner diameter portions corresponding to the fitting tapered outer diameter portions;
joining the joining outer diameter portion of the inner metal member and the joining inner diameter portion of the outer metal member by means of resistance heating generated by conducting electricity while the joining outer diameter portion of the inner metal member and the joining inner diameter portion of the outer metal member are pressurized in the axial direction; and
bringing the fitting tapered outer diameter portions of the inner metal member and the fitting tapered inner diameter portions of the outer metal member into a fitted state in association with the joining.

It is preferable to conduct electricity while an end portion of the joining outer diameter portion of the inner metal member in the pressurizing direction and an end portion of the joining inner diameter portion of the outer metal member in the opposite direction of the pressurizing direction are pressurized in the axial direction in a contact state.

It is preferable to bring the fitting tapered outer diameter portions of the inner metal member and the fitting tapered inner diameter portions of the outer metal member into a fitted state by press fitting.

It is preferable to form a closed space between a joined portion of the joining outer diameter portion and the joining inner diameter portion and a fitted tapered portion of the fitting tapered outer diameter portion and the fitting tapered inner diameter portion.

The inner metal member may be a differential case, and the outer metal member may be a ring gear. In this case, the ring gear may be a spur gear.

Furthermore, in order to solve the above problems, a metal member joining structure according to the present disclosure is a joining structure for an outer peripheral face portion of an inner metal member and an inner peripheral face portion of an outer metal member, and the metal member joining structure includes
a joined portion in which a joining outer diameter portion formed at an axial-direction intermediate portion of the outer peripheral face portion of the inner metal member and a joining inner diameter portion formed at an axial-direction intermediate portion of the inner peripheral face portion of the outer metal member are joined together by plastic flow, and
fitted tapered portions in which fitting tapered outer diameter portions formed on both axial-direction sides across the joining outer diameter portion of the inner metal member and fitting tapered inner diameter portions formed on both axial-direction sides across the joining inner diameter portion of the outer metal member are fitted together in a pressurized state.

It is preferable that a closed space is formed between the joined portion of the joining outer diameter portion and the joining inner diameter portion and the fitted tapered portion of the fitting tapered outer diameter portion and the fitting tapered inner diameter portion.

The inner metal member may be a differential case, and the outer metal member may be a ring gear. In this case, the ring gear may be a spur gear.

### Advantageous Effects of Invention

In the metal member joining method according to the present disclosure, the joining outer diameter portion of the inner metal member and the joining inner diameter portion of the outer metal member are located at one axial-direction intermediate portion, so that it is easy to perform pressurization and electric conduction and the joining energy is small, and moreover, deformation of the outer metal member is small and stress concentration to the joined portion is small.

Furthermore, joining by pressurization and electric conduction is performed until the fitting tapered outer diameter portions of the inner metal member and the fitting tapered inner diameter portions of the outer metal member are brought into contact with each other and are brought into a fitted state, so that no level difference occurs between the inner metal member and the outer metal member.

In addition, the fitting tapered outer diameter portions of the inner metal member and the fitting tapered inner diameter portions of the outer metal member are fitted together on both axial-direction sides of the joined portion, so that stress concentration can be avoided without depending on the acting direction of an external force, and a joining structure strong against a shock load is obtained.

In one embodiment, electric conduction is performed while the end portion of the joining outer diameter portion of the inner metal member in the pressurizing direction and the end portion of the joining inner diameter portion of the outer metal member in the opposite direction of the pressurizing direction are pressurized in the axial direction in a contact state, so that the inner metal member and the outer metal member can be joined together in a coaxial state, and a joining structure uniform in the circumferential direction is obtained.

In one embodiment, the fitting tapered outer diameter portions of the inner metal member and the fitting tapered inner diameter portions of the outer metal member are brought into a fitted state by press fitting, so that a strong fitted state is obtained.

In one embodiment, the closed space is formed between the joined portion of the joining outer diameter portion and the joining inner diameter portion and the fitted tapered portion of the fitting tapered outer diameter portion and the fitting tapered inner diameter portion, so that burrs generated by joining are allowed to escape to the closed space, and a failure of joining due to the burrs can be prevented.

In one embodiment, the inner metal member is a differential case, and the outer metal member is a ring gear, so that the differential case and the ring gear can be joined together with high strength, and reliability of the differential mechanism can be enhanced.

In one embodiment, in the case where the ring gear is a spur gear and is provided in a differential mechanism of a front-engine front-drive (FF), even when a reverse moment acts on the ring gear at the time of advancing and receding, stress concentration of the joined portion can be avoided with respect to any of the moments, and a differential mechanism with high strength and durability can be provided.

In the metal member joining structure according to the present disclosure,
the joining outer diameter portion of the inner metal member and the joining inner diameter portion of the outer metal member are located at one axial-direction intermediate portion, so that it is easy to perform pressurization and electric conduction and the joining energy is small, and moreover, deformation of the outer metal member is small and stress concentration to the joined portion is small.

Furthermore, joining by pressurization and electric conduction is performed until the fitting tapered outer diameter portions of the inner metal member and the fitting tapered inner diameter portions of the outer metal member are brought into contact with each other and are brought into a fitted state, so that no level difference occurs between the inner metal member and the outer metal member.

In addition, the fitting tapered outer diameter portions of the inner metal member and the fitting tapered inner diameter portions of the outer metal member are fitted together on both axial-direction sides of the joined portion, so that stress concentration can be avoided without depending on the acting direction of an external force, and a joining structure strong against a shock load is obtained.

In one embodiment, the closed space is formed between the joined portion of the joining outer diameter portion and the joining inner diameter portion and the fitted tapered portion of the fitting tapered outer diameter portion and the fitting tapered inner diameter portion, so that burrs generated by joining are allowed to escape to the closed space, and a failure of joining due to the burrs can be prevented.

In one embodiment, the inner metal member is a differential case, and the outer metal member is a ring gear, so that the differential case and the ring gear can be joined together with high strength, and reliability of the differential mechanism can be enhanced.

In one embodiment, in the case where the ring gear is a spur gear and is provided in a differential mechanism of a front-engine front-drive (FF), even when a reverse moment acts on the ring gear at the time of advancing and receding, stress concentration of the joined portion can be avoided with respect to any of the moments, and a differential mechanism with high strength and durability can be provided.

### Brief Description of Drawings

[FIG. 1] FIG. 1 is a cross-sectional view of a differential device of an FF vehicle in which joining has been made by using a joining method according to an embodiment of the present disclosure.
[FIG. 2] FIG. 2 is an enlarged cross-sectional view illustrating a joining structure for a differential case and a ring gear in the differential device of FIG. 1.
[FIG. 3] FIG. 3 is a cross-sectional view illustrating the joining method for the differential case and the ring gear in the order of steps.
[FIG. 4] FIG. 4 is a cross-sectional view of a differential device of an FR vehicle in which joining has been made by using the joining method according to the embodiment of the present disclosure.
[FIG. 5] FIG. 5 is an enlarged cross-sectional view illustrating a joining structure for a differential case and a ring gear in the differential device of FIG. 4.
[FIG. 6] FIG. 6 is an enlarged cross-sectional view illustrating another joining structure for the differential case and the ring gear in the differential device of FIG. 4.
[FIG. 7] FIG. 7 is a cross-sectional view of a differential device using conventional bolt fastening.
[FIG. 8] FIG. 8 is an enlarged cross-sectional view illustrating a first example of a conventional joining structure for a differential case and a ring gear.
[FIG. 9] FIG. 9 is an enlarged cross-sectional view illustrating a second example of a conventional joining structure for the differential case and the ring gear.

### Description of Embodiment

Hereinafter, an embodiment of the present disclosure will be described with reference to the attached drawings.

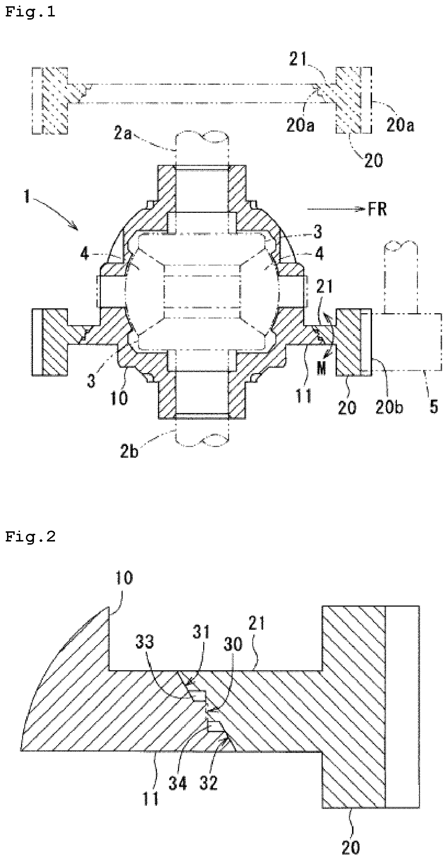

FIG. 1 illustrates a differential device 1 of a front-engine front-drive (FF) vehicle. The differential device 1 includes a differential case 10 and a ring gear 20 which are joined together by a joining method according to the embodiment of the present disclosure. The differential case 10 corresponds to an inner metal member of the present disclosure, and the ring gear 20 corresponds to an outer metal member of the present disclosure.

The differential case 10 is made of cast iron, which is specifically a spherical graphite cast iron such as FCD450 or FCD550. A pair of side gears 3 coupled to axles 2a and 2b and a pair of pinion gears 4 engaged with the pair of side gears 3 are housed in the differential case 10. An outer peripheral flange portion 11 is formed on an outer peripheral face of the differential case 10.

The ring gear 20 is made of steel, which is specifically a carburized and quenched steel such as SCR420H. The ring gear 20 is a gear component that receives a driving force transmitted from an unillustrated transmission via a gear 5. The ring gear 20 has an opening 20a penetrating therethrough in the axial direction. A spur gear 20b is formed on an outer peripheral face of the ring gear 20, and an inner peripheral flange portion 21 having the same thickness as the outer peripheral flange portion 11 of the differential case 10 is formed on an inner peripheral face of the ring gear 20.

An outer peripheral face portion of the outer peripheral flange portion 11 of the differential case 10 and an inner peripheral face portion of the inner peripheral flange portion 21 of the ring gear 20 are joined together by the joining method of the embodiment of the present disclosure. Before describing the joining method, a description will be given of the shape of the outer peripheral face portion of the outer peripheral flange portion 11 of the differential case 10 before joining and the shape of the inner peripheral face portion of the inner peripheral flange portion 21 of the ring gear 20 before joining.

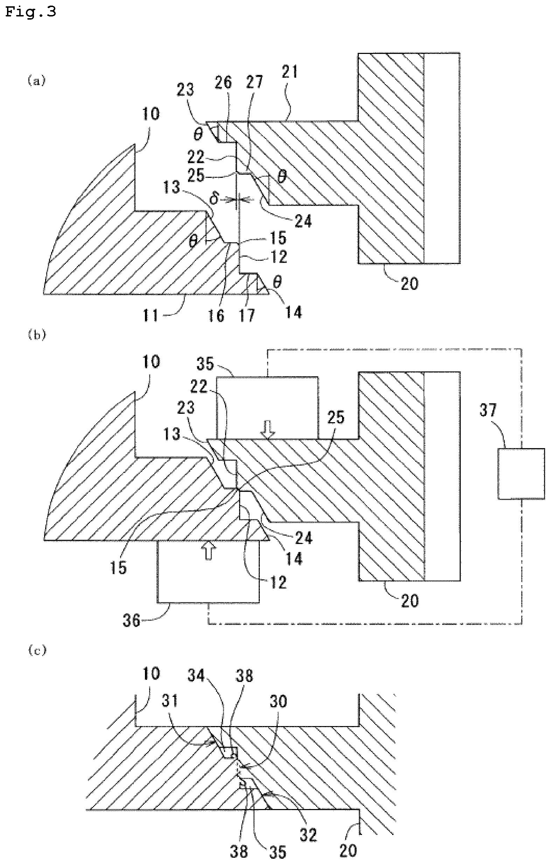

As illustrated in I in FIG. 3, in the outer peripheral face portion of the outer peripheral flange portion 11 of the differential case 10, a joining outer diameter portion 12 is formed at an axial-direction intermediate portion thereof, and a first fitting tapered outer diameter portion 13 and a second fitting tapered outer diameter portion 14 are formed on both axial-direction sides across the joining outer diameter portion 12.

A chamfered portion 15 of about C0.5 at 45° is formed at an end portion of the joining outer diameter portion 12 on the side to be brought into contact with the joining outer diameter portion 12 of the ring gear 20.

The first fitting tapered outer diameter portion 13 is formed on the radial-direction inner side from the joining outer diameter portion 12, and is inclined so as to have a smaller diameter as the distance from the joining outer diameter portion 12 increases in the axial direction. An inclination angle θ of the first fitting tapered outer diameter portion 13 with respect to the central axis of the differential case 10 is 7° to 30° or less, preferably 10° to 15°. A first step portion 16 is formed between the first fitting tapered outer diameter portion 13 and the joining outer diameter portion 12.

The second fitting tapered outer diameter portion 14 is formed on the radial-direction outer side from the joining outer diameter portion 12, and is inclined so as to have a larger diameter as the distance from the joining outer diameter portion 12 increases in the axial direction. An inclination angle θ of the second fitting tapered outer diameter portion 14 with respect to the central axis of the differential case 10 is 7° to 30°, preferably 10° to 15°, similarly to the first fitting tapered outer diameter portion 13. A second step portion 17 is formed between the second fitting tapered outer diameter portion 14 and the joining outer diameter portion 12. The axial-direction length of the second fitting tapered outer diameter portion 14 is formed so as to be shorter than the axial-direction length of the first fitting tapered outer diameter portion 13.

On the other hand, in the inner peripheral face portion of the inner peripheral flange portion 21 of the ring gear 20, a joining inner diameter portion 22 is formed at an axial-direction intermediate portion thereof, and a first fitting tapered inner diameter portion 23 and a second fitting tapered inner diameter portion 24 are formed on both axial-direction sides across the joining inner diameter portion 22.

The joining inner diameter portion 22 corresponds to the joining outer diameter portion 12 of the differential case 10, and is formed with a smaller diameter than the joining outer diameter portion 12 so as to overlap with the joining outer diameter portion 12. An overlap margin δ of the joining inner diameter portion 22 and the joining outer diameter portion 12 is about 0.6 mm. A chamfered portion 25 of about C0.5 at 45° is formed at an end portion of the joining inner diameter portion 22 on the side to be brought into contact with the joining outer diameter portion 12 of the differential case 10.

The first fitting tapered inner diameter portion 23 corresponds to the first fitting tapered outer diameter portion 13 of the differential case 10, is formed on the radial-direction inner side from the joining inner diameter portion 22, and is inclined so as to have a smaller diameter as the distance from the joining inner diameter portion 22 increases in the axial direction. An inclination angle θ of the first fitting tapered inner diameter portion 23 with respect to the central axis of the ring gear 20 is 7° to 30° or less, preferably 10° to 15°, which is the same inclination angle as that of the first fitting tapered outer diameter portion 13. A first step portion 26 is formed between the first fitting tapered inner diameter portion 23 and the joining inner diameter portion 22.

The second fitting tapered inner diameter portion 24 corresponds to the second fitting tapered outer diameter portion 14 of the differential case 10, is formed on the radial-direction outer side from the joining inner diameter portion 22, and is inclined so as to have a larger diameter as the distance from the joining inner diameter portion 22 increases in the axial direction. An inclination angle θ of the second fitting tapered inner diameter portion 24 with respect to the central axis of the ring gear 20 is 7° to 30° or less, preferably 10° to 15°, which is the same inclination angle as that of the second fitting tapered outer diameter portion 14. A second step portion 27 is formed between the second fitting tapered inner diameter portion 24 and the joining inner diameter portion 22. The axial-direction length of the second fitting tapered inner diameter portion 24 is formed so as to be longer than the axial-direction length of the first fitting tapered inner diameter portion 23.

The first fitting tapered inner diameter portion 23 and the second fitting tapered inner diameter portion 24 are disposed in a positional relationship in which the first fitting tapered outer diameter portion 13 and the first fitting tapered inner diameter portion 23 are brought into contact with each other and simultaneously the second fitting tapered outer diameter portion 14 and the second fitting tapered inner diameter portion 24 are brought into contact with each other.

Furthermore, the joining outer diameter portion 12 of the differential case 10 and the joining inner diameter portion 22 of the ring gear 20 are disposed so as to be offset from each other in the axially opposite direction. The first fitting tapered outer diameter portion 13 of the differential case 10 is formed so as to be longer than the first fitting tapered inner diameter portion 23 of the ring gear 20, and the second fitting tapered outer diameter portion 14 of the differential case 10 is formed so as to be shorter than the second fitting tapered inner diameter portion 24 of the ring gear 20.

Thus, when the differential case 10 and the ring gear 20 are joined together, a joined portion 30 of the joining outer diameter portion 12 of the differential case 10 and the joining inner diameter portion 22 of the ring gear 20 is located at an axial-direction intermediate position. Furthermore, the axial-direction length of the joined portion 30 provided by the joining outer diameter portion 12 and the joining inner diameter portion 22, the axial-direction length of a first fitted tapered portion 31 provided by the first fitting tapered outer diameter portion 13 and the first fitting tapered inner diameter portion 23, and the axial-direction length of a second fitted tapered portion 32 provided by the second fitting tapered outer diameter portion 14 and the second fitting tapered inner diameter portion 24 are the same. In addition, a first closed space 33 is formed between the joined portion 30 and the first fitted tapered portion 31, and a second closed space 34 is formed between the joined portion 30 and the second fitted tapered portion 32.

Either the axial-direction length of the first fitted tapered portion 31 or the axial-direction length of the second fitted tapered portion 32 can be increased or decreased according to the magnitude of opposing bending moments. Furthermore, the first closed space 33 and the second closed space 34 house burrs generated at the time of joining, and thus either one of them in which more burrs are generated can be made larger.

Next, the joining method for the differential case 10 and the ring gear 20 will be described.

As illustrated in I in FIG. 3, the joining outer diameter portion 12, the first fitting tapered outer diameter portion 13, and the second fitting tapered outer diameter portion 14 are previously formed on the outer peripheral face portion of the differential case 10 serving as the inner metal member, as described above.

Similarly, the joining inner diameter portion 22, the first fitting tapered inner diameter portion 23, and the second fitting tapered inner diameter portion 24 are formed on the inner peripheral face portion of the ring gear 20 serving as the outer metal member, as described above.

Next, the differential case 10 is inserted into the opening 20a of the ring gear 20, and as illustrated in II in FIG. 3, the chamfered portion 15 of the joining outer diameter portion 12 of the differential case 10 and the chamfered portion 25 of the joining inner diameter portion 22 of the ring gear 20 are brought into contact with each other over the entire circumference thereof. As a result, the differential case 10 and the ring gear 20 are brought into a coaxial state.

In this state, electrodes 35 and 36 are respectively placed in the outer peripheral flange portion 11 of the differential case 10 and the inner peripheral flange portion 21 of the ring gear 20. The electrodes 35 and 36 are disposed so as to interpose the joining outer diameter portion 12 of the differential case 10 and the joining inner diameter portion 22 of the ring gear 20 therebetween in the axial direction and so as to be as close as possible to each other. Subsequently, electric conduction is performed by a power supply device 37 while the differential case 10 and the ring gear 20 are pressurized in the axial direction via the electrodes 35 and 36, thereby performing ring mash joining. For example, a pressure of about 6 ton is applied for electric conduction of 100 to 200 kA.

A current supplied from the power supply device 37 flows from the electrode 35 of the ring gear 20 to the electrode 36 of the differential case 10 through a contact portion of the chamfered portion 25 of the joining inner diameter portion 22 of the ring gear 20 and the chamfered portion 15 of the joining outer diameter portion 12 of the differential case 10. As a result of this electric conduction, a portion at which the joining outer diameter portion 12 and the joining inner diameter portion 22 overlap with each other generates heat at 800 to 900°C by resistance heating and thereby softens so as to plastically flow. Since the differential case 10 and the ring gear 20 are pressurized in the axial direction, as illustrated in III in FIG. 3, the ring gear 20 is pushed into the differential case 10 with the progress of the heating, the softening, and the plastic flow in the overlapping portion in the pressurizing direction until the first fitting tapered inner diameter portion 23 and the second fitting tapered inner diameter portion 24 in the ring gear 20 are respectively brought into contact with the first fitting tapered outer diameter portion 13 and the second fitting tapered outer diameter portion 14 in the differential case 10.

When the first fitting tapered inner diameter portion 23 and the second fitting tapered inner diameter portion 24 in the ring gear 20 are respectively brought into contact with the first fitting tapered outer diameter portion 13 and the second fitting tapered outer diameter portion 14 in the differential case 10, a current from the electrode 35 passes through three locations of the first fitted tapered portion 31 of the first fitting tapered outer diameter portion 13 and the first fitting tapered inner diameter portion 23, the joined portion 30, and the second fitted tapered portion 32 of the second fitting tapered outer diameter portion 14 and the second fitting tapered inner diameter portion 24, and a current flowing through the joined portion 30 significantly decreases, so that heating of the joined portion 30 decreases and the ring mash joining ends.

The joining outer diameter portion 12 of the differential case 10 and the joining inner diameter portion 22 of the ring gear 20 form the joined portion 30 by the ring mash joining. The first fitting tapered outer diameter portion 13 and the second fitting tapered outer diameter portion 14 in the differential case 10 are respectively press-fitted to the first fitting tapered inner diameter portion 23 and the second fitting tapered inner diameter portion 24 in the ring gear 20, forming the first fitted tapered portion 31 and the second fitted tapered portion 32. The portion at which the joining outer diameter portion 12 and the joining inner diameter portion 22 overlap with each other is extruded as burrs 38 on both axial-direction sides and housed in the first closed space 33 between the joined portion 30 and the first fitted tapered portion 31 and the second closed space 34 between the joined portion 30 and the second fitted tapered portion 32.

The differential case 10 and the ring gear 20 in which the ring mash joining has been made from a joining structure having the joined portion 30, the first fitted tapered portion 31, and the second fitted tapered portion 32 as illustrated in FIG. 2. The joined portion 30 is a portion at which the joining outer diameter portion 12 formed at the axial-direction intermediate portion of the outer peripheral face portion of the differential case 10 and the joining inner diameter portion 22 formed at the axial-direction intermediate portion of the inner peripheral face portion of the ring gear 20 are joined together by plastic flow. The first fitted tapered portion 31 and the second fitted tapered portion 32 are portions at which the first fitting tapered outer diameter portion 13 and the second fitting tapered outer diameter portion 14 which are formed on both axial-direction sides across the joining outer diameter portion 12 of the differential case 10 are respectively fitted to the first fitting tapered inner diameter portion 23 and the second fitting tapered inner diameter portion 24 which are formed on both axial-direction sides across the joining inner diameter portion 22 of the ring gear 20, in a pressurized state.

In the ring mash joining of the above embodiment, the joining outer diameter portion 12 of the differential case 10 and the joining inner diameter portion 22 of the ring gear 20 are located at one axial-direction intermediate portion, so that it is easy to perform pressurization and electric conduction and the joining energy is small, and moreover, deformation of the ring gear 20 is small and stress concentration to the joined portion 30 is small.

Furthermore, at the time of joining, the ring mash joining continues until the first fitting tapered inner diameter portion 23 and the second fitting tapered inner diameter portion 24 in the ring gear 20 are respectively brought into contact with the first fitting tapered outer diameter portion 13 and the second fitting tapered outer diameter portion 14 in the differential case 10, and the ring mash joining ends when the first fitting tapered outer diameter portion 13 and the second fitting tapered outer diameter portion 14 in the differential case 10 and the first fitting tapered inner diameter portion 23 and the second fitting tapered inner diameter portion 24 in the ring gear 20 are brought into a fitted state, so that no level difference occurs between the differential case 10 and the ring gear 20.

In addition, the first fitting tapered outer diameter portion 13 and the second fitting tapered outer diameter portion 14 in the differential case 10 are respectively fitted to the first fitting tapered inner diameter portion 23 and the second fitting tapered inner diameter portion 24 in the ring gear 20 on both axial-direction sides of the joined portion 30 to thereby form the first fitted tapered portion 31 and the second fitted tapered portion 32, so that stress concentration can be avoided without depending on the acting direction of an external force, and a joining structure strong against a shock load is obtained. For example, when the ring gear 20 receives a bending moment that curves the ring gear 20 in a downwardly protruding manner as illustrated in FIG. 1, fitted faces of the first fitted tapered portion 31 mainly overcome this bending moment, and when receiving a reverse moment, fitted faces of the second fitted tapered portion 32 overcome this bending moment, so that stress concentration to the joined portion 30 can be avoided.

In the ring mash joining of the above embodiment, the first closed space 33 and the second closed space 34 are formed between the joined portion 30 and the first fitted tapered portion 31 and between the joined portion 30 and the second fitted tapered portion 32, so that the burrs 38 generated by joining are allowed to escape to the first closed space 33 and the second closed space 34, and a failure of joining due to the burrs can be prevented. Consequently, the number of deburring processes can be reduced.

The above embodiment is applied to the differential device 1 having the differential case 10 as the inner metal member and the ring gear 20 as the outer metal member, in which the differential case 10 and the ring gear 20 can be joined together with high strength and reliability of the differential mechanism can be enhanced.

In a differential mechanism of a front-engine front-drive (FF) type vehicle, the ring gear 20 is typically a spur gear. In this case, according to the joining structure using the ring mash joining of the above embodiment, even when a reverse moment acts on the ring gear 20 at the time of advancing and receding, the fitted faces in either the first fitted tapered portion 31 or the second fitted tapered portion 32 face each other with respect to any of the moments and thereby oppose the bending moment, so that stress concentration of the joined portion 30 can be avoided, and a differential mechanism with high strength and durability can be provided.

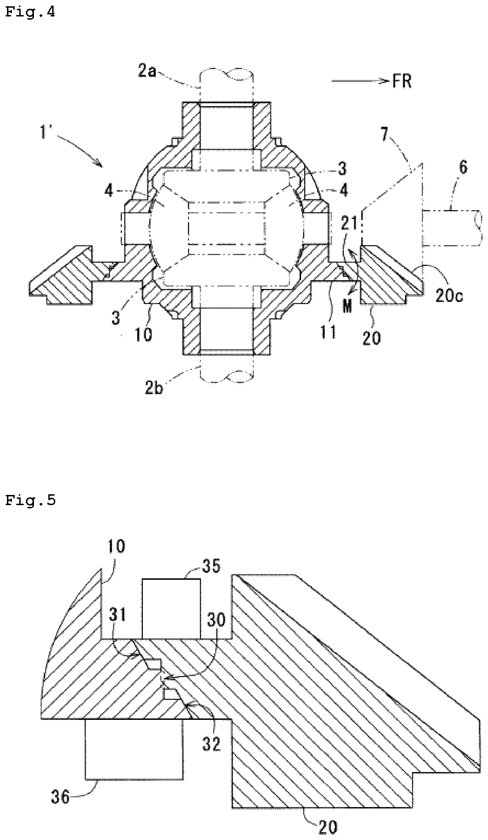

As illustrated in FIG. 4, the present disclosure can also be applied to joining of the differential case 10 and the ring gear 20 in a differential device 1' of a front-engine rear-drive (FR) vehicle. In the differential device 1' of the FR vehicle, the ring gear 20 is typically a bevel gear 20c engaged with a gear 7 of a propeller shaft 6. Even in this case, as illustrated in FIG. 5, a joining structure having the joined portion 30 of the axial-direction intermediate portion and the first fitted tapered portion 31 and the second fitted tapered portion 32 which are provided on both axial-direction sides across the joined portion 30 can be provided by the joining method of the above embodiment.

Note that in the case where the ring gear 20 of a differential device of an FR vehicle is the bevel gear 20c, a moment in the same direction acts on the ring gear 20 at the time of advancing and receding, and thus one joined portion 30 and one fitted tapered portion 32 may be formed as illustrated in FIG. 6. In this case, the fitted faces of the fitted tapered portion 32 face each other and thereby can oppose the bending moment.

### Reference Signs List

- 1: differential device
- 10: differential case (inner metal member)
- 12: joining outer diameter portion
- 13: first fitting tapered outer diameter portion
- 14: second fitting tapered outer diameter portion
- 20: ring gear (outer metal member)
- 20b: spur gear
- 22: joining inner diameter portion
- 23: first fitting tapered inner diameter portion
- 24: second fitting tapered inner diameter portion
- 30: joined portion
- 31: first fitted tapered portion
- 32: second fitted tapered portion
- 33: first closed space
- 34: second closed space
- 35: electrode
- 36: electrode
- 37: power supply device
- 38: burr

## Claims

1. A metal member joining method of joining an outer peripheral face portion of an inner metal member and an inner peripheral face portion of an outer metal member by means of resistance heating generated by conducting electricity while the outer peripheral face portion of the inner metal member and the inner peripheral face portion of the outer metal member are pressurized in an axial direction, the method comprising:
forming, on the outer peripheral face portion of the inner metal member, a joining outer diameter portion located at an axial-direction intermediate portion, and fitting tapered outer diameter portions located on both axial-direction sides across the joining outer diameter portion;
forming, on the inner peripheral face portion of the outer metal member, a joining inner diameter portion corresponding to the joining outer diameter portion and having a diameter smaller than a diameter of the joining outer diameter portion so as to overlap with the joining outer diameter portion, and fitting tapered inner diameter portions corresponding to the fitting tapered outer diameter portions;
joining the joining outer diameter portion of the inner metal member and the joining inner diameter portion of the outer metal member by means of resistance heating generated by conducting electricity while the joining outer diameter portion of the inner metal member and the joining inner diameter portion of the outer metal member are pressurized in the axial direction; and
bringing the fitting tapered outer diameter portions of the inner metal member and the fitting tapered inner diameter portions of the outer metal member into a fitted state in association with the joining.

2. The metal member joining method according to claim 1, wherein electricity is conducted while an end portion of the joining outer diameter portion of the inner metal member in a pressurizing direction and an end portion of the joining inner diameter portion of the outer metal member in an opposite direction of the pressurizing direction are pressurized in the axial direction in a contact state.

3. The metal member joining method according to claim 1 or 2, wherein the fitting tapered outer diameter portions of the inner metal member and the fitting tapered inner diameter portions of the outer metal member are brought into a fitted state by press fitting.

4. The metal member joining method according to any of claims 1 to 3, wherein a closed space is formed between a joined portion of the joining outer diameter portion and the joining inner diameter portion and a fitted tapered portion of the fitting tapered outer diameter portion and the fitting tapered inner diameter portion.

5. The metal member joining method according to any of claims 1 to 4, wherein the inner metal member is a differential case, and the outer metal member is a ring gear.

6. The metal member joining method according to claim 5, wherein the ring gear is a spur gear.

7. A metal member joining structure for an outer peripheral face portion of an inner metal member and an inner peripheral face portion of an outer metal member, the metal member joining structure comprising:
a joined portion in which a joining outer diameter portion formed at an axial-direction intermediate portion of the outer peripheral face portion of the inner metal member and a joining inner diameter portion formed at an axial-direction intermediate portion of the inner peripheral face portion of the outer metal member are joined together by plastic flow; and
fitted tapered portions in which fitting tapered outer diameter portions formed on both axial-direction sides across the joining outer diameter portion of the inner metal member and fitting tapered inner diameter portions formed on both axial-direction sides across the joining inner diameter portion of the outer metal member are fitted together in a pressurized state.

8. The metal member joining structure according to claim 7, wherein a closed space is formed between the joined portion of the joining outer diameter portion and the joining inner diameter portion and the fitted tapered portion of the fitting tapered outer diameter portion and the fitting tapered inner diameter portion.

9. The metal member joining structure according to claim 7 or 8, wherein the inner metal member is a differential case, and the outer metal member is a ring gear.

10. The metal member joining structure according to claim 9, wherein the ring gear is a spur gear.
